# EUROPÄISCHE PATENTSCHRIFT

(11) **EP 0 831 130 B1**
(45) Veröffentlichungstag und Bekanntmachung des Hinweises auf die Patenterteilung: **13.12.2000**
(21) Anmeldenummer: 97115692.2
(22) Anmeldetag: 10.09.1997
(51) Int. Cl.: C09B 31/08, C09B 43/16, C09B 43/132

(54) **Lichtechte Disazofarbstoffe**
Light fast disazodyes
Colorants disazoiques stables à la lumière

(30) Priorität: 23.09.1996 DE 19638889
(43) Veröffentlichungstag der Anmeldung: 25.03.1998
(73) Patentinhaber: BAYER AG, 51368 Leverkusen (DE)
(72) Erfinder: Kunde, Klaus, Dr., 53819 Neunkirchen (DE)

(56) Entgegenhaltungen:
- EP-A- 0 514 330
- EP-A- 0 534 903
- EP-A- 0 622 424
- EP-A- 0 623 704

## Beschreibung

Die vorliegende Erfindung betrifft neue Disazofarbstoffe, Verfahren zu deren Herstellung sowie deren Verwendung zum Färben von cellulosehaltigen Materialien.

Die vorliegende Erfindung betrifft neue Farbstoffe der Formel (I) 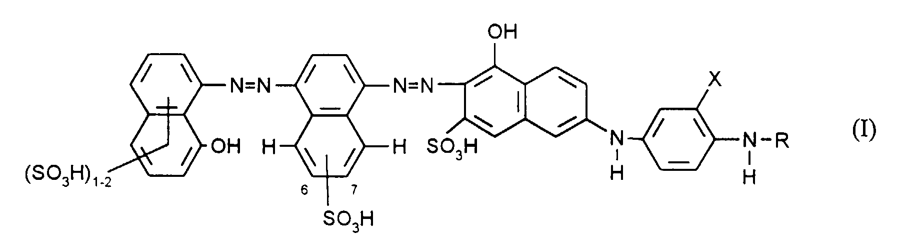 worin
die Sulfogruppe in 6- oder 7-Stellung gebunden ist,
- R: für jeweils gegebenenfalls 1- bis 3-fach gleich oder verschieden durch C₁-C₄-Alkyl, C₁-C₄-Alkoxy, F, Cl, Br, COOH, SO₃H oder NO₂ substituiertes Benzoyl oder Naphthoyl oder für gleich oder verschieden durch OH, NH₂, NHC₂H₄OH, N(CH₃)C₂H₄OH, N(C₂H₄OH)_{2,} 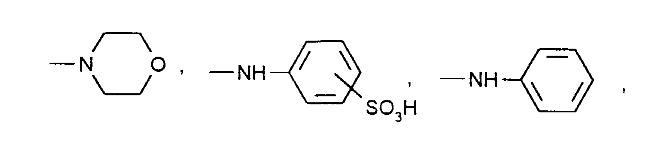 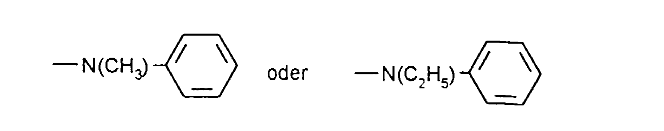 in den Positionen 4 und 6 substituiertes 1,3,5-Triazinyl steht,
und
- X: für SO₃H oder COOH steht.

Bevorzugt sind Farbstoffe der Formel (II) 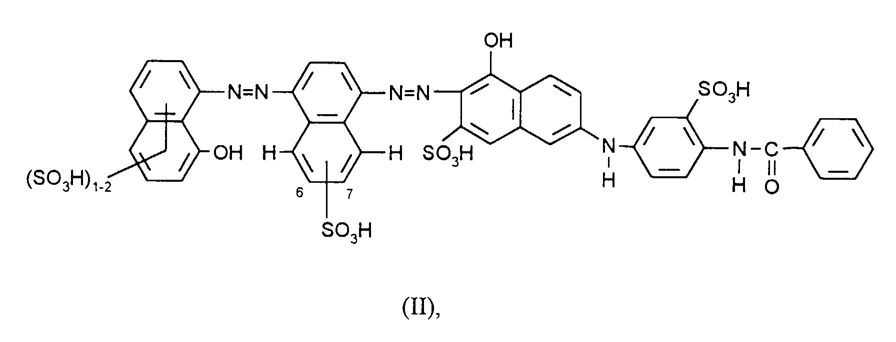 worin die Sulfogruppe in 6- oder 7-Stellung gebunden ist.

Besonders bevorzugt sind Farbstoffe der Formel (III) 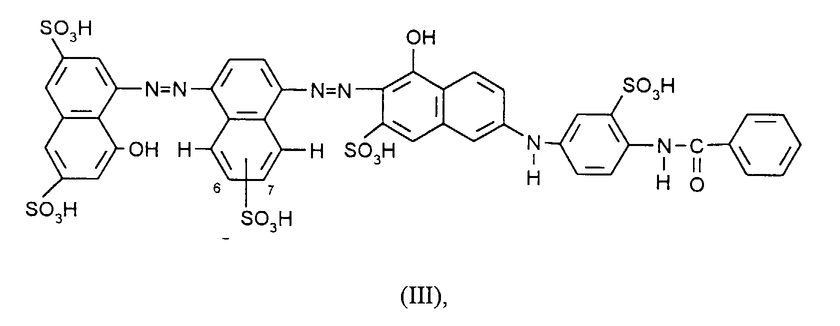 worin die Sulfogruppe in 6- oder 7-Stellung gebunden ist.

Die erfindungsgemäßen Farbstoffe der Formel (I) können hergestellt werden, indem man Verbindungen der Formel (IV) 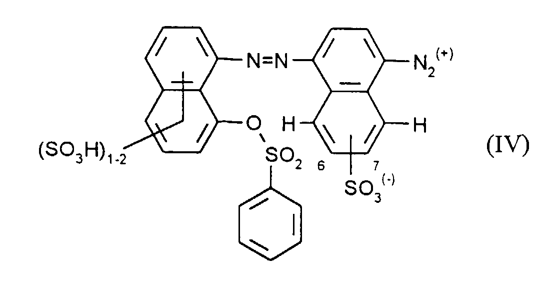 worin die Sulfogruppe in 6- oder 7-Stellung gebunden ist,
mit Verbindungen der Formel (V) 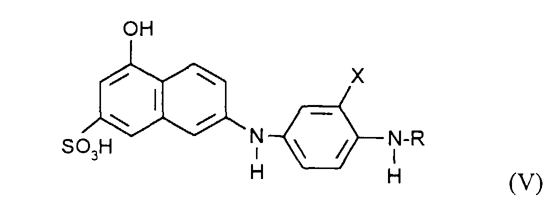 worin
- R und X: oben unter Formel (I) angegebene Bedeutung haben,
kuppelt und anschließend den Benzolsulfonsäurerest selektiv in bekannter Weise abspaltet,
oder indem man Verbindungen der Formel (VI) 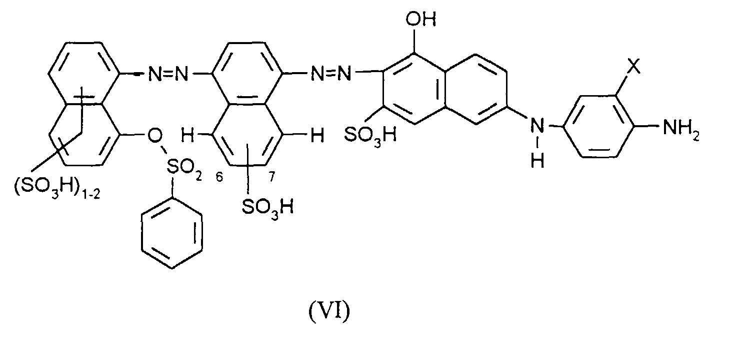 worin die Sulfogruppe in 6- oder 7-Stellung gebunden ist, und
- X: die oben unter Formel (I) angegebene Bedeutung hat,
entweder
a) mit Verbindungen der Formel R'-Cl,
   worin R' für einen gegebenenfalls 1- bis 3-fach gleich oder verschieden, durch C₁-C₄-Alkyl, C₁-C₄-Alkoxy, F, Cl, Br, COOH, SO₃H oder NO₂ substituierten Benzoyl- oder Naphthoylrest steht,
   kondensiert oder
b) zur Herstellung der in 4- und 6-Stellung substituierten 1,3,5-Triazinderivate zunächst mit Cyanurchlorid und danach entweder schrittweise mit wäßriger Lauge, vorzugsweise Natronlauge, oder einem Amin der Formel

   NH₃, NH₂C₂H₄OH, NH(CH₃)C₂H₄OH, NH(C₂H₄OH)₂ 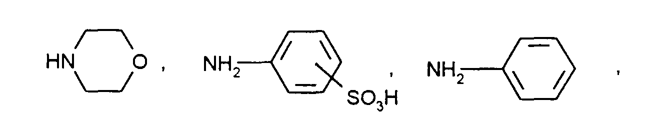 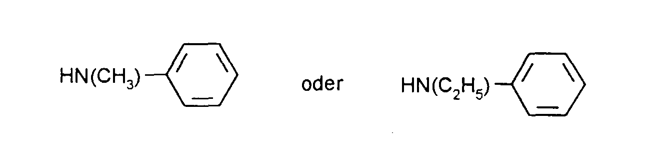
umsetzt, und anschließend den Benzolsulfonsäurerest selektiv abspaltet.

Die Verbindungen der Formeln (IV) und (V) sind bekannt oder können analog zu bekannten Verbindungen hergestellt werden.

Farbstoffe der Formel (I) worin R für Wasserstoff steht sind aus EP-A 0 534 903 bekannt. Die erfindungsgemäßen Farbstoffe unterscheiden sich von diesen bekannten Farbstoffen durch ein besseres Ausziehverhalten, d.h. es bleibt deutlich weniger Farbstoff im Färbeabwasser. Farbstoffe der Formel (I), worin X Wasserstoff bedeutet sind in der EP-A 0 514 330 beschrieben, gegenüber diesen bekannten Farbstoffen weisen die erfindungsgemäßen Farbstoffe eine deutlich bessere Löslichkeit in Wasser auf und einen deutlich geringeren Unterschied der Farbtöne bei mit Harzleim geleimtem gegenüber ungeleimtem Papier.

Die Kupplung der Diazoniumverbindungen der Formel (IV) mit den Verbindungen der Formel (V) erfolgt in wäßrigem oder wäßrig-organischem Medium, vorzugsweise in Wasser, in Lösung oder Suspension bei 0 bis 40°C, vorzugsweise bei 5 bis 20°C, bei pH-Werten zwischen 7 und 10, vorzugsweise zwischen 8,5 und 9,5.

Die selektive Abspaltung des Benzolsulfonsäurerestes erfolgt bei Temperaturen zwischen 60 und 105°C, vorzugsweise zwischen 70 und 90°C bei pH-Werten zwischen 10 und 11,5, vorzugsweise zwischen 10,2 und 11,0.

Die Kondensation der Verbindungen der Formel (VI) mit Verbindungen der Formel R'-Cl, worin R' für einen gegebenenfalls substituierten Benzoyl- oder Naphthoylrest steht, erfolgt in wäßriger Lösung bei pH-Werten zwischen 3 und 10, vorzugsweise zwischen 5 und 8 bei Temperaturen zwischen 8 und 50°C, vorzugsweise zwischen 10 und 40°C, das Verfahren ist an sich bekannt.

Die Kondensation der Verbindungen der Formel (VI) mit Cyanurchlorid erfolgt in wäßrigem Medium bei Temperaturen zwischen 0 und 20°C bei pH-Werten zwischen 4 und 6, der Austausch des zweiten Cl-Atoms mit einem der oben angegebenen Amine erfolgt bei Temperaturen zwischen 20 und 60°C bei pH-Werten zwischen 5 und 9 und der Austausch des dritten Cl-Atoms mit einem der oben angegebenen Amine oder des zweiten und dritten Cl-Atoms durch OH bei Temperaturen zwischen 50 und 160°C bei pH-Werten zwischen 5 und 10; das Verfahren ist an sich bekannt.

Die Umsetzung der Verbindungen der Formel (VII) 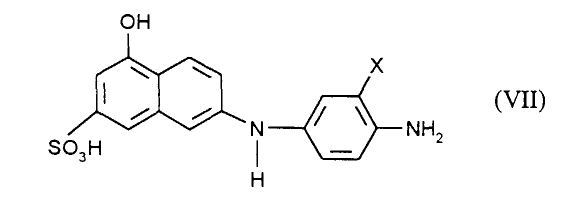 worin
- X: die oben angegebene Bedeutung hat,
zu Verbindungen der Formel (V) erfolgt analog.

Die erfindungsgemäßen Farbstoffe können zum Färben von cellulosehaltigen Materialien verwendet werden, insbesondere von Papier in sehr lichtechten blauen Farbtönen.

Die Farbstoffe können nach allen in der Papier- und Textilindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -Sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Zum Färben von Papier in der Masse können die Farbstoffe der Papierpulpe vor der Blattbildung zugesetzt werden, entweder dem Dickstoff nach dem Aufschlagen der Cellulose oder dem Dünnstoff vor dem Auflaufen auf die Papiermaschine. Bei der Herstellung von in der Masse geleimtem Papier werden sie vorzugsweise vor der Zugabe des Leimungsmittels dem Dünnstoff zugesetzt.

Bei der Oberflächenfärbung wird der Farbstoff nach der Blattbildung appliziert. Dies geschieht vorzugsweise in der Leimpresse, indem der Farbstoff in einer konzentrierten Stärkelösung aufgelöst und in dieser Form auf das Papier aufgebracht wird.

Die Farbstoffe der Formel (I) können eingesetzt werden als feste Farbstoffpräparationen, vorzugsweise als Pulver oder Granulate, die gegebenenfalls übliche Zusatzstoffe wie z.B. ionische oder nichtionische Einstellmittel und/oder Entstaubungsmittel enthalten.

Für das erfindungsgemäße Verfahren bevorzugt ist die Verwendung flüssiger Präparationen, insbesondere die Verwendung von konzentrierten wässrigen Lösungen, die vorzugsweise frei sind von organischen Lösungsvermittlern und mindestens einen Farbstoff der allgemeinen Formel (I) enthalten. Die flüssigen Farbstoffpräparationen enthalten im allgemeinen 10 bis 40 Gew.-%, vorzugsweise 20 bis 40 Gew.-% an mindestens einem Farbstoff der Formel (I), bezogen auf die fertige Präparation.

### Beispiel 1

70,4 g der Diazoniumverbindung der Formel (VIII) 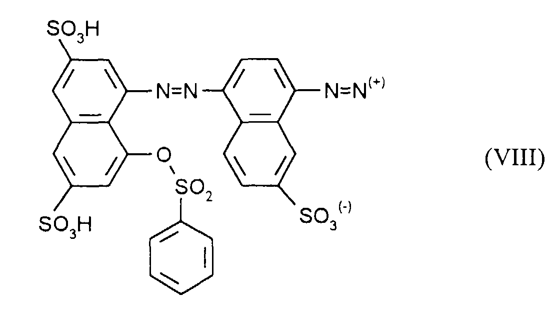 werden in 500 ml Wasser gelöst und zu einer Lösung von 51,4 g der Verbindung der Formel (IX) 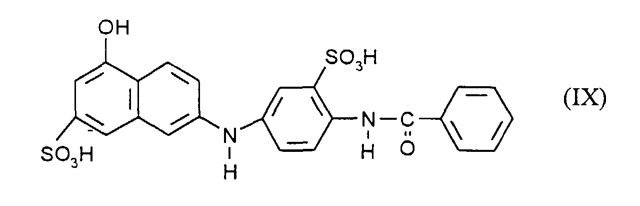 in 500 ml Wasser bei einer Temperatur von 5 bis 10° und einem pH-Wert von 8 zugetropft, dabei wird der pH-Wert mit Soda-Lösung konstant gehalten. Nach Beendigung der Kupplung wird die Lösung auf 80°C erhitzt und solange mit Natronlauge versetzt, bis der pH-Wert bei 10,8 konstant bleibt. Nach Beendigung der Esterhydrolyse wird der pH-Wert der Lösung mit Salzsäure auf 7 gebracht. Der Farbstoff wird durch Zugabe von NaCl ausgefällt, isoliert und getrocknet (λₘₐₓ = 607 nm).

### Beispiel 2

Verwendet man statt der Verbindung der Formel (VIII) die Verbindung der Formel (X) 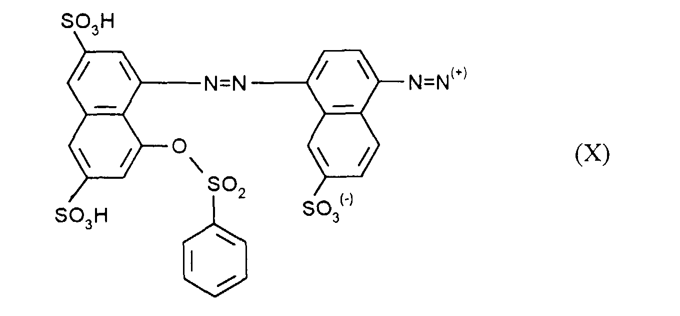 so erhält man den isomeren Farbstoff (λₘₐₓ = 599 nm).

### Beispiel 3 (Herstellung der Verbindung der Formel (IX) aus Beispiel 1)

40,0 g 4-Hydroxy-7-(4'-amino-3'-sulfophenylamino)-naphthalin-2-sulfonsäure werden mit Soda-Lösung bei 25°C und einem pH-Wert von 6 in 500 ml Wasser gelöst, dann werden 17,5 g Benzoylchlorid zugetropft, wobei der pH-Wert mit Soda-Lösung konstant gehalten wird. Das Kondensationsprodukt entspricht der folgenden Formel:

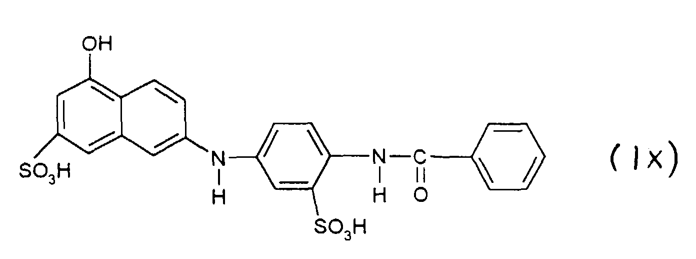

## Patentansprüche

1. Farbstoffe der Formel (I) 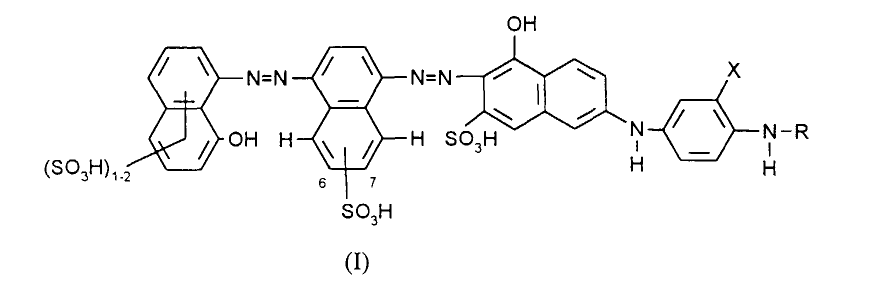 worin
die Sulfogruppe in 6- oder 7-Stellung gebunden ist,
R für jeweils gegebenenfalls 1- bis 3-fach gleich oder verschieden durch C₁-C₄-Alkyl, C₁-C₄-Alkoxy, F, Cl, Br, COOH, SO₃H oder NO₂ substituiertes Benzoyl oder Naphthoyl oder für gleich oder verschieden durch OH, NH₂, NHC₂H₄OH, N(CH₃)C₂H₄OH, N(C₂H₄OH)₂, 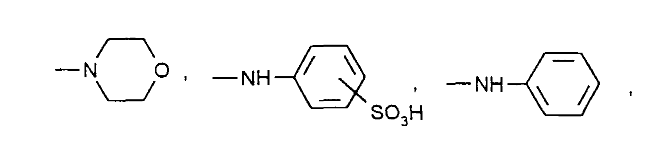 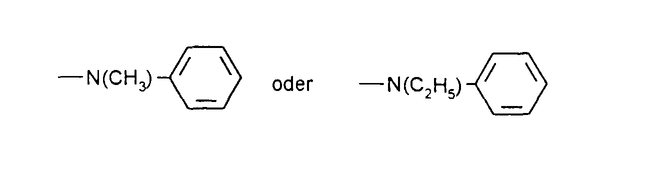 in den Positionen 4 und 6 substituiertes 1,3,5-Triazinyl steht,
und
X für SO₃H oder COOH. steht.

2. Farbstoffe gemäß Anspruch 1 der Formel 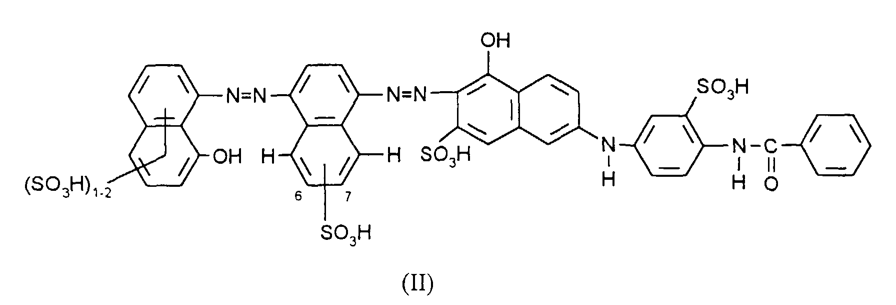 worin die Sulfogruppe in 6- oder 7-Stellung gebunden ist.

3. Farbstoffe gemäß Anspruch 1 der Formel 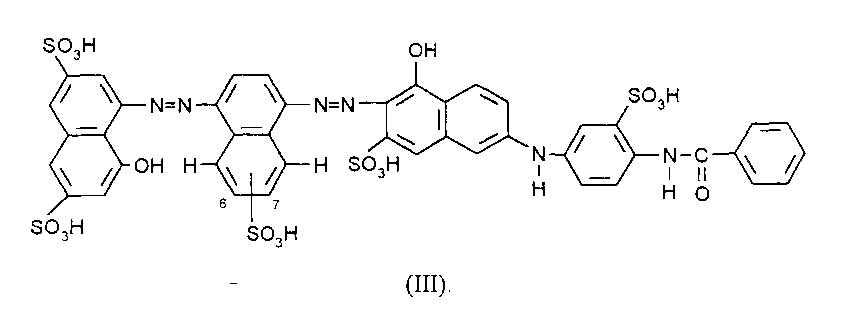 worin die Sulfogruppe in 6- oder 7-Stellung gebunden ist.

4. Verfahren zur Herstellung von Farbstoffen gemäß Anspruch 1, dadurch gekennzeichnet, daß man Verbindungen der Formel (IV) 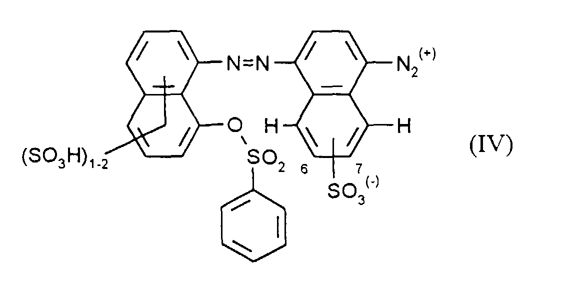 worin die SO₃^{⊖}-Gruppe in 6- oder 7-Stellung gebunden ist,
mit Verbindungen der Formel (V) 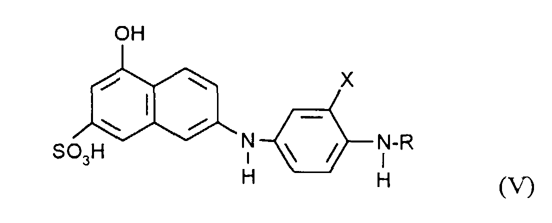 worin
R und X in Anspruch 1 angegebene Bedeutung haben,
kuppelt und anschließend den Benzolsulfonsäurerest selektiv in bekannter Weise abspaltet.

5. Verfahren zur Herstellung von Farbstoffen gemäß Anspruch 1, dadurch gekennzeichnet, daß man Verbindungen der Formel (VI) 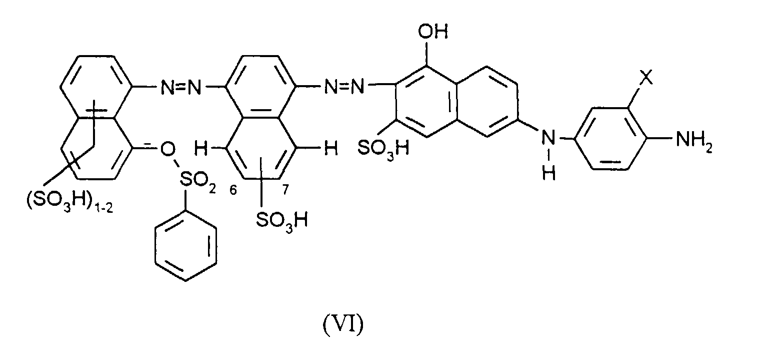 worin die Sulfogruppe in 6- oder 7-Stellung gebunden ist, und
X die in Anspruch 1 angegebene Bedeutung hat, entweder
a) mit Verbindungen der Formel R'-Cl,
worin R' für einen gegebenenfalls 1- bis 3-fach gleich oder verschieden, durch C₁-C₄-Alkyl, C₁-C₄-Alkoxy, F, Cl, Br, COOH, SO₃H oder NO₂ substituierten Benzoyl- oder Naphthoylrest steht,
kondensiert oder
b) zur Herstellung der in 4- und 6-Stellung substituierten 1,3,5-Triazinderivate zunächst mit Cyanurchlorid und danach entweder schrittweise mit wäßriger Lauge, vorzugsweise Natronlauge, oder einem Amin der Formel
NH₃, NH₂C₂H₄OH, NH(CH₃)C₂H₄OH, NH(C₂H₄OH)₂ 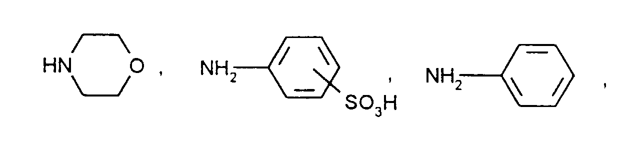 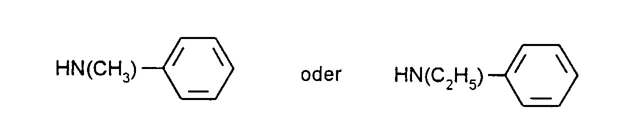
umsetzt, und anschließend den Benzolsulfonsäurerest selektiv abspaltet.

6. Verwendung der Farbstoffe gemäß Ansprüchen 1 bis 3 zum Färben von cellulosehaltigen Materialien.

7. Verwendung der Farbstoffe gemäß Ansprüchen 1 bis 3 zum Färben von Papier.

## Claims

1. Dyestuff of the formula (I) 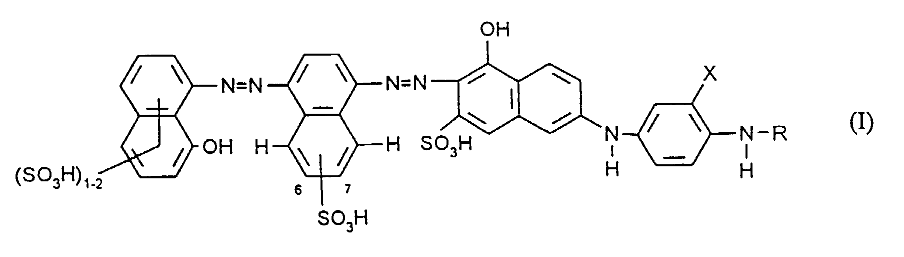 in which
the sulpho group is bonded in the 6- or 7-position,
R represents benzoyl or naphthoyl, in each case optionally substituted once to three times in an identical or different manner by C₁-C₄-alkyl, C₁-C₄-alkoxy, F, Cl, Br, COOH, SO₃H or NO₂, or represents 1,3,5-triazinyl which is substituted in positions 4 and 6 in an identical or different manner by OH, NH₂, NHC₂H₄OH, N(CH₃) C₂H₄OH, N(C₂H₄OH)₂ 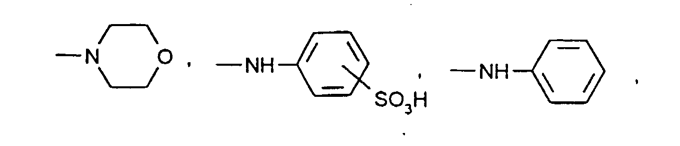 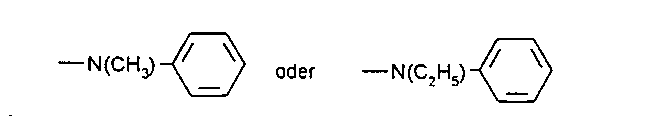 and
X represents SO₃H or COOH.

2. Dyestuff according to Claim 1, of the formula 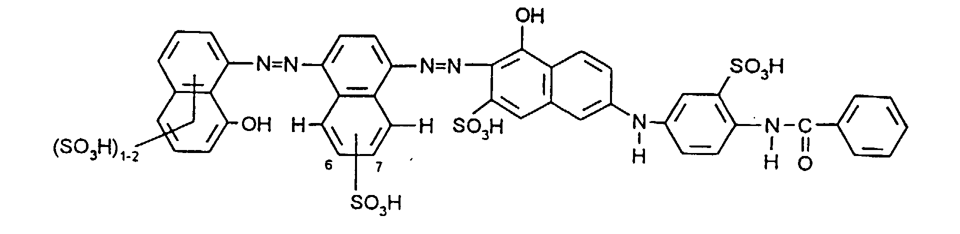 in which the sulpho group is bonded in the 6- or 7-position.

3. Dyestuff according to Claim 1, of the formula 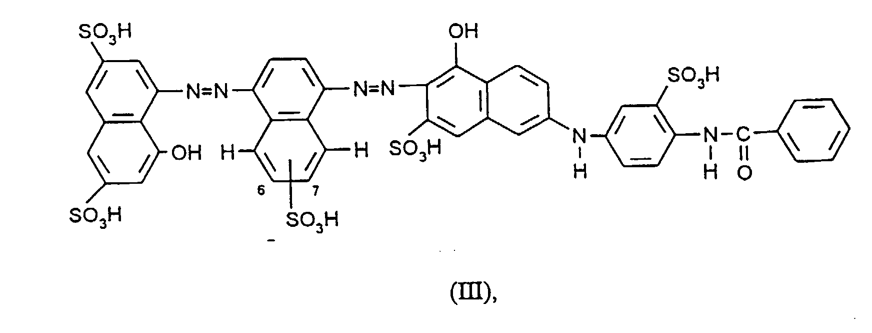 in which the sulpho group is bonded in the 6- or 7-position.

4. Process for the preparation of a dyestuff according to Claim 1, characterized in that a compound of the formula (IV) 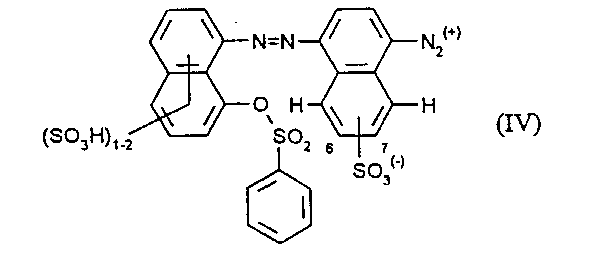 in which the SO₃- group is bonded in the 6- or 7-position,
is coupled with a compound of the formula (V)
in which 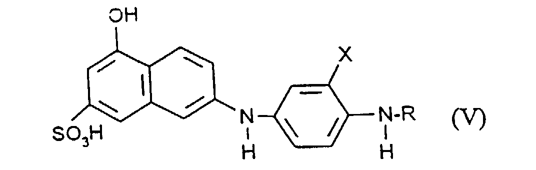
R and X have the meaning given in Claim 1,
and then the benzenesulphonic acid radical is split off selectively in a known manner.

5. Process for the preparation of a dyestuff according to Claim 1, characterized in that a compound of the formula (VI) 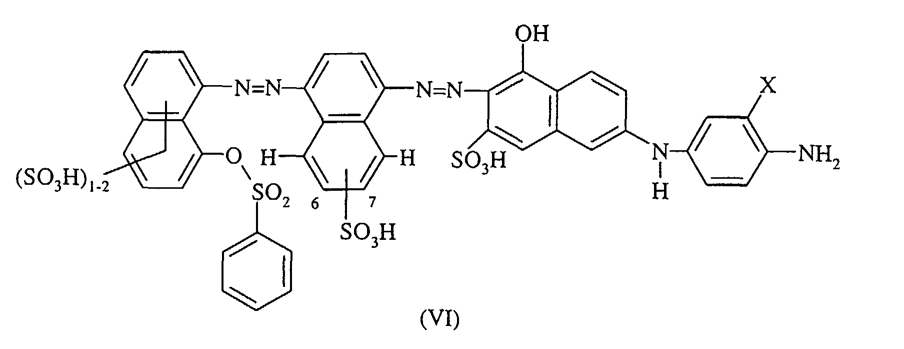 in which the sulpho group is bonded in the 6- or 7-position and
X has the meaning given in Claim 1, is subjected either
a) to a condensation reaction with a compound of the formula R'-Cl,
in which R' represents a benzoyl or naphthoyl radical which is optionally substituted once to three times in an identical or different manner by C₁-C₄-alkyl, C₁-C₄-alkoxy, F, Cl, Br, COOH, SO₃H or NO₂, or
b) to prepare a 1,3,5-triazine derivative substituted in the 4- and 6-position, to a reaction first with cyanuric chloride and then either stepwise with aqueous alkali, preferably sodium hydroxide solution, or an amine of the formula
NH₃, NH₂C₂H₄OH, NH (CH₃)C₂H₄OH, NH(C₂H₄OH)₂ 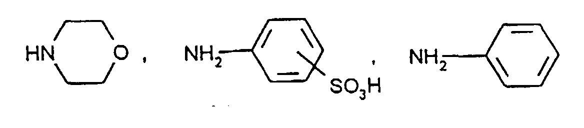 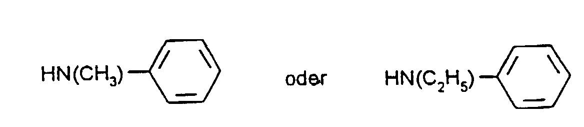
and then the benzenesulphonic acid radical is split off selectively.

6. Use of a dyestuff according to Claim 1 for dyeing cellulosic materials.

7. Use of a dyestuff according to Claim 1 for dyeing paper.

## Revendications

1. Colorants de formule (I) 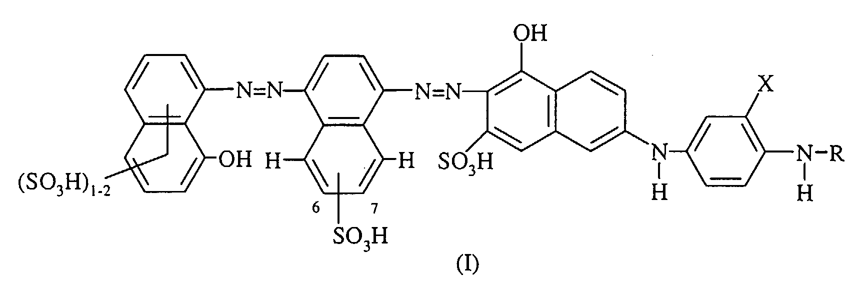 dans laquelle
le groupe sulfo est fixé en position 6 ou 7,
R représente un radical benzoyle ou naphtoyle portant le cas échéant un à trois substituants identiques ou différents choisis parmi les groupes alkyle en C₁-C₄, alcoxy en C₁-C₄, F, Cl, Br, les groupes COOH, SO₃H ou NO₂, ou bien un groupe 1,3,5-triazinyle portant, dans les positions 4 et 6, des substituants identiques ou différents choisis parmi OH, NH₂, NHC₂H₄OH, N(CH₃)C₂H₄OH, N(C₂H₄OH)₂, 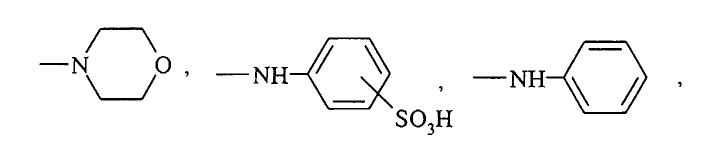 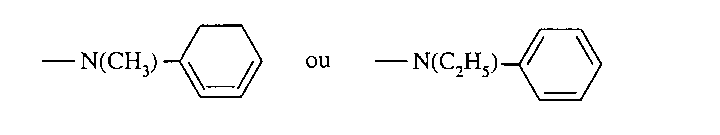 et
X représente SO₃H ou COOH.

2. Colorants selon la revendication 1, de formule 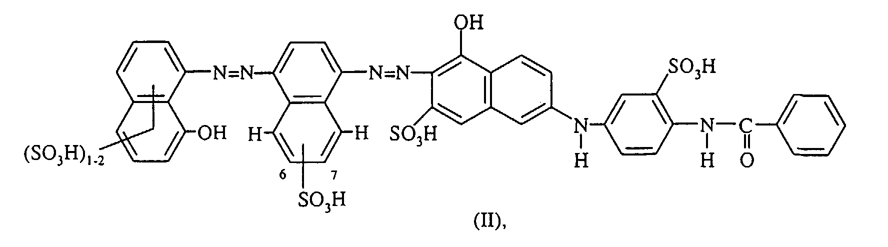 dans laquelle le groupe sulfo est fixé en position 6 ou 7.

3. Colorants selon la revendication 1, de formule 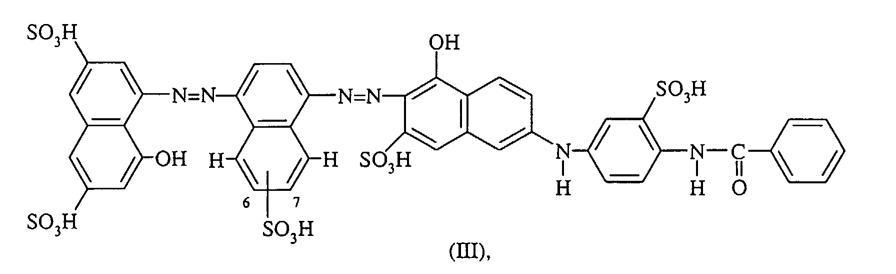 dans laquelle le groupe sulfo est fixé en position 6 ou 7.

4. Procédé de préparation des colorants selon la revendication 1, caractérisé en ce que l'on copule des composés de formule (IV) 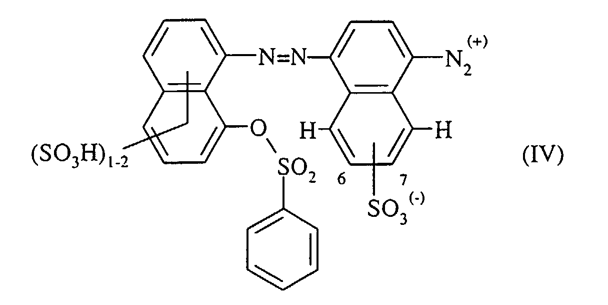 dans laquelle le groupe SO₃^{⊖} est fixé en position 6 ou 7,
avec des composés de formule (V) 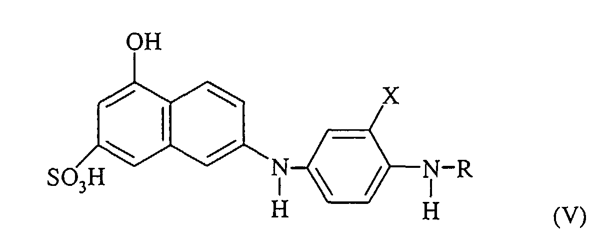 dans laquelle
R et X ont les significations indiquées dans la revendication 1,
puis on scinde sélectivement, de manière connue, le radical d'acide benzènesulfonique.

5. Procédé de préparation des colorants de la revendication 1, caractérisé en ce que, partant de composés de formule (VI) 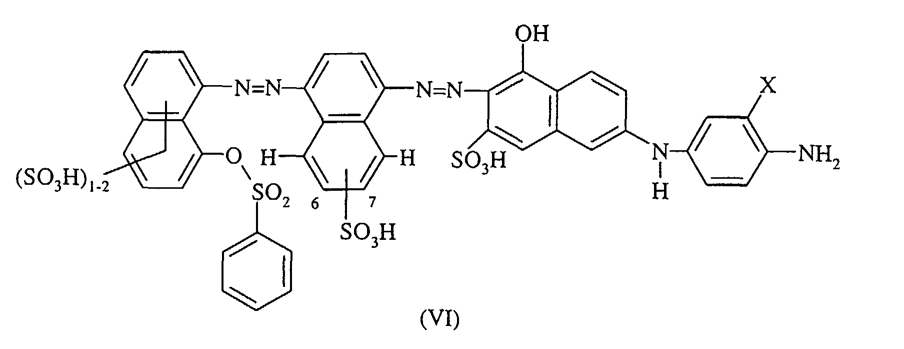 dans laquelle le groupe sulfo est fixé en position 6 ou 7 et
X a les significations indiquées dans la revendication 1,
a) on les condense avec des composés de formule R'-Cl,
dans laquelle R' représente un radical benzoyle ou naphtoyle portant éventuellement un à trois substituants identiques ou différents choisis parmi les groupes alkyle en C₁-C₄, alcoxy en C₁-C₄, F, Cl, Br, COOH, SO₃H ou NO₂,
ou bien
b) pour la préparation des dérivés 1,3,5-triaziniques substitués dans les positions 4 et 6, on les fait réagir d'abord avec le chlorure de cyanuryle puis, par paliers, avec une lessive alcaline, de préférence la lessive de soude, ou avec une amine de formule
NH₃, NH₂C₂H₄OH, NH(CH₃)C₂H₄OH, NH(C₂H₄OH)₂ 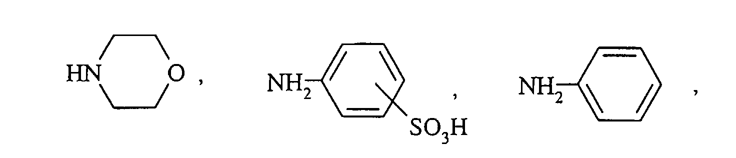 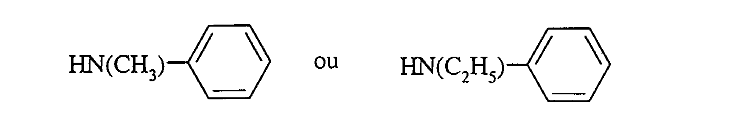
puis on scinde sélectivement le radical d'acide benzènesulfonique.

6. Utilisation des colorants selon les revendications 1 à 3, pour la teinture de matières contenant de la cellulose.

7. Utilisation des colorants selon les revendications 1 à 3, pour la coloration du papier.
